# FASCICULE DE BREVET EUROPEEN

(11) **EP 0 497 398 B1**
(45) Date de publication et mention de la délivrance du brevet: **29.10.1997**
(21) Numéro de dépôt: 92200095.5
(22) Date de dépôt: 15.01.1992
(51) Int. Cl.: G06K 11/16, G01L 1/04

(54) **Dispositif à écran tactile**
Vorrichtung an berührungsaktivem Schirm
Tactile screen device

(30) Priorité: 22.01.1991 FR 9100670
(43) Date de publication de la demande: 05.08.1992
(73) Titulaire: LABORATOIRES D'ELECTRONIQUE PHILIPS S.A.S., 94450 Limeil-Brévannes (FR); Philips Electronics N.V., 5621 BA Eindhoven (NL)
(72) Inventeur: Delmas, Gilles, F-75008 Paris (FR); Martin, Guy, F-75008 Paris (FR); Courdille, Michel, F-75008 Paris (FR); Lemonier, Michel, F-75008 Paris (FR)
(74) Mandataire: Landousy, Christian

(56) Documents cités:
- GB-A- 1 037 440
- GB-A- 1 055 289
- US-A- 3 717 036
- US-A- 3 795 140
- US-A- 4 558 757
- PATENT ABSTRACTS OF JAPAN vol. 10, no. 348 (P-519), 22 novembre 1986; & JP - A - 61148522 (NEC HOME ELECTRONICS) 07.07.1986
- SOVIET INVENTIONS ILLUSTRATED Derwent Publications Ltd., semaine 9011, abrégé no. 082021, S02, 25 avril 1990; & SU - A - 1483292 (MEDVED) 30.05.1989

## Description

L'invention concerne un dispositif à écran tactile muni d'une plaque mobile, ayant un poids P, et un cadre fixe qui coopèrent entre eux par au moins deux détecteurs à lame à jauges de contrainte pour détecter des coordonnées de points d'application de forces d'appui exercées sur la plaque mobile.

Un dispositif à écran tactile muni de tels détecteurs est par exemple décrit dans le brevet US 4 558 757. L'écran tactile est constitué d'une plaque réunie à un cadre fixe par des jauges de contrainte, l'ensemble pouvant être placé devant un écran de visualisation. Lorsqu'une force d'appui est appliquée, par exemple à l'aide du doigt, sur la plaque d'écran, les jauges de contrainte détectent le déplacement de la plaque d'écran. En combinant les amplitudes des déplacements subis par chacune des jauges on en déduit la position de la zone où s'est exercée la force d'appui. Ceci est effectué par des circuits électroniques associés. Un tel écran tactile permet alors de servir d'interface entre un intervenant et un dispositif d'affichage ou une machine de traitement.

Les jauges de contrainte sont placées individuellement sur des plaquettes élastiques. Celles-ci sont munies à leurs extrémités de projections qui servent de points de fixation. L'une des extrémités est assujettie à la plaque mobile et l'autre extrémité au cadre fixe. La déformation s'opère au centre de la plaquette élastique où se situe la jauge de contrainte.

De tels écrans tactiles sont destinés à opérer dans des conditions variées, à subir des manipulations plus ou moins délicates, à opérer dans des gammes de températures et dans des positions diverses. Pour un usage de grande diffusion ils doivent non seulement être robustes mais aussi nécessiter le moins possible de réglages et d'adaptations aux conditions d'exploitation. Certains de ces dérèglements liés, par exemple, aux dérives thermiques, aux tarages initiaux, peuvent dans certains cas être compensés au niveau des moyens électroniques associés mais avec un coût supplémentaire. Il n'en est pas de même pour d'autres dérèglements qui peuvent conduire à des cassures ou des surcharges qui, elles, sont non compensables.

Les plaquettes élastiques qui supportent les jauges de contrainte dans le brevet US 4 558 757 présentent en particulier l'inconvénient d'être fixées rigidement tant à la plaque d'écran elle-même qu'au cadre fixe ce qui peut conduire à des difficultés pour utiliser un tel écran tactile dans des conditions notamment de positions et de températures variées.

L'écran tactile décrit dans le brevet US 4 558 757 permet de déterminer les coordonnées du point d'appui d'une force en un point quelconque de la surface. Cet écran tactile est principalement prévu pour opérer avec une plaque placée en position sensiblement horizontale. Lorsqu'elle est mise en position verticale le poids de la plaque vient perturber les données électriques délivrées par les jauges de contrainte. Chaque jauge étant sollicitée différemment il s'ensuit que des corrections assez complexes doivent être mises en oeuvre au niveau du traitement électronique. Les variations de position, de température, de planéité de la plaque concourent à la complexité de mise en oeuvre des corrections de ces différents paramètres.

JP-A-61/148522 décrit un dispositif dans lequel l'écran tactile est supporté par deux membres agissant comme des clips qui entourent l'écran dans sa partie haute et sa partie basse. Ces membres sont quant à eux fixés à un cadre fixe par des cavaliers lorsque l'écran est sollicité par une force d'appui les membres se déforments.

Le problème posé est donc de réaliser un tel dispositif à écran tactile pour lequel ont été supprimés les inconvénients antérieurs.

Ce but est atteint avec un dispositif à écran tactile tel que défini dans la revendication et présentant notamment une plaque mobile suspendue au cadre fixe par des moyens de suspensions qui équilibrent totalement ou partiellement le poids P de ladite plaque lorsque ledit cadre et ladite plaque sont placés en position respectivement verticale ou inclinée.

Avantageusement en position verticale le poids de la plaque n'est plus supporté par les détecteurs à jauge de contrainte mais essentiellement par les moyens de suspension. Il y a ainsi un découplage entre les forces de pesanteur qui agissent par le poids de la plaque elle-même et les forces d'appui qui agissent sur la plaque par un opérateur ou un organe approprié. Préférentiellement les suspensions sont fixées à des parties hautes de la plaque et du cadre. Il est possible d'attacher les parties basses de la plaque et du cadre fixe par au moins une attache élastique qui s'oppose à l'action de la (des) suspension(s) et qui maintient la plaque en position. Préférentiellement, l'écran tactile comprend en haut deux suspensions et en bas deux attaches élastiques, dont les points d'ancrage sur le cadre fixe déterminent une figure géométrique (un quadrilatère lorsqu'il y a 4 points d'ancrage) qui, vue de face, entoure la plaque mobile. Le montage élastique en suspension lui assure avantageusement une grande résistance aux chocs, aux vibrations.

Pour que le dispositif s'adapte encore plus précisément à des conditions multiples de fonctionnement et/ou de réalisation, il est possible de prévoir que la coopération entre la plaque mobile et le cadre fixe s'opère de manière à tolérer des écarts de dilatation et/ou de tolérances mécaniques. On donne alors à la plaque mobile une certaine liberté de glissement.

Dans un mode complémentaire de réalisation au moins un détecteur est muni d'une lame à jauge de contrainte ayant une première et une seconde extrémité agencées respectivement au cadre fixe et à la plaque mobile à l'aide d'au moins un organe en U, l'(les) extrémité(s) ainsi agencée(s) étant en appui légèrement élastique sur des butées disposées entre les branches de l'organe en U, ladite lame étant pratiquement sans jeu dans une direction perpendicualire auxdites branches et apte à un déplacement à frottement doux dans une direction quelconque parallèle au plan de la lame.

Ainsi avantageusement la jauge de contrainte ou les supports fixe et/ou mobile peuvent subir des variations de température donc présenter des dilatations qui ne compliquent pas le traitement électronique ultérieur. L'influence du gauchissement desdits supports fixes ou mobiles est également aisément surmontée. La précision de la mesure des déformations de la jauge n'est pas affectée pour des conditions d'exploitation variées.

Les déformations de la jauge de contrainte fixée à la lame peuvent être déterminées pour des déplacements opérés dans les deux sens de la première direction sensiblement perpendiculaire à la surface de la lame. Dans le plan perpendiculaire à ces deux sens de déplacement la jauge de contrainte possède une certaine liberté qui lui permet de légèrement glisser librement dans l'organe en U pour compenser les dilatations, les gauchissements. Ce glissement s'opère avec le minimum de frottements en donnant au contact une surface de portée réduite. Ceci peut être obtenu par des butées à forme arrondie, par exemple hémisphérique. Ces butées peuvent être fixées à la lame ou à l'organe en U. Elles peuvent être moulées dans la masse ou rapportées, elles peuvent être maintenues en position par collage, soudure ou tout autre moyen approprié. Un mode préférentiel consiste à les mouler dans l'organe en U, ce qui présente l'avantage de définir parfaitement l'axe commun aux deux butées qui viennent en appui sur les deux faces opposées de la lame. En effet lorsque les butées ne sont pas correctement placées en vis-à-vis il est nécessaire d'opérer des corrections au niveau des moyens électroniques qui exploitent les mesures issues des jauges.

L'élasticité des contacts peut être assurée soit par l'organe en U, soit par les butées, soit en la répartissant entre l'organe en U et les butées . L'amplitude correcte de l'élasticité peut être obtenue en intervenant soit sur les épaisseurs des butées ou des branches du U, soit sur la nature des matériaux. Ceux-ci peuvent être choisis parmi les matériaux suivants : caoutchouc, matières plastiques, matières composites.

L'invention concerne la réalisation mécanique du dispositif à écran tactile, le traitement des signaux électriques issus des jauges de contrainte étant effectué en conformité avec l'état de l'art.

L'invention sera mieux comprise à l'aide des figures suivantes données à titre d'exemples non limitatifs qui représentent :
- figures 1A, 1B : deux vues de côté d'un module de fixation selon l'invention avec des butées placées respectivement sur la lame et sur l'organe en U,
- figure 1C : une vue de côté d'un module de fixation selon l'invention avec un support mobile muni d'un réglage de la position au repos,
- figure 2 : une vue schématique d'un écran tactile muni de trois détecteurs de forces avec leurs modules de fixation et de suspensions et d'attaches élastiques.
- figures 3A, 3B, 3C, 3D : différents modes de montages des suspensions et des attaches élastiques.

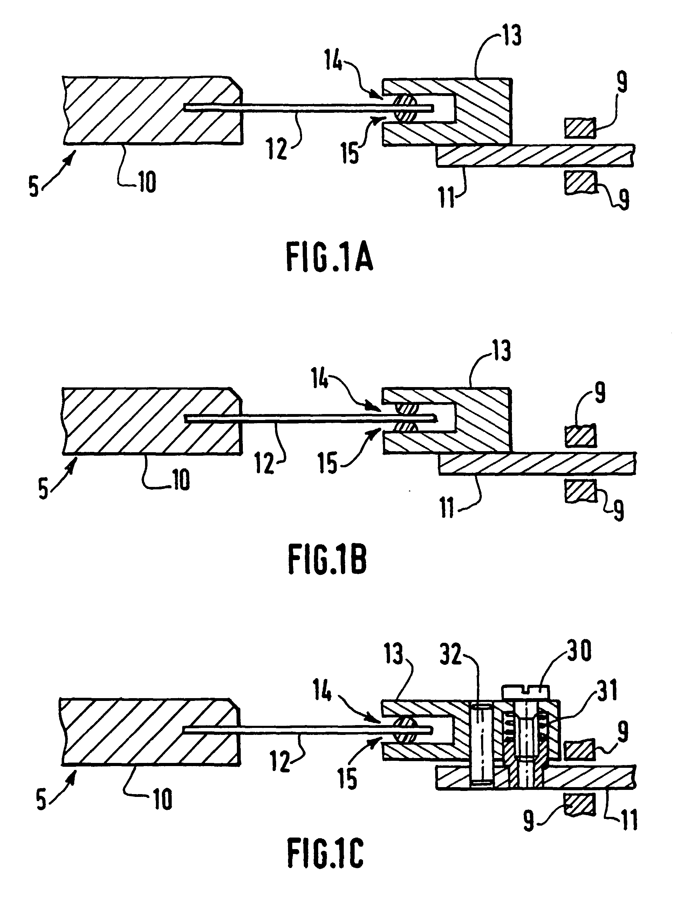

Le mode préférentiel de réalisation fait coopérer la plaque mobile et le cadre fixe à l'aide d'un module de fixation muni d'un organe en U. Ce module de fixation est tout d'abord décrit. Il comprend (figure 1A) un support fixe 10, un support mobile 11 et une lame à jauge de contrainte 12 qui est fixée par une première extrémité dans une fente pratiquée dans le support fixe 10. Une seconde extrémité est introduite entre les branches d'un organe en U 13 qui est fixé au support mobile 11. Des éléments 9 limitent la course du support mobile 11 de façon à rester dans le domaine de déformation admis par la lame à jauges de contrainte 12. Entre la seconde extrémité de la lame et les branches de l'organe en U sont placées des butées 14, 15. Les contacts entre les butées et l'organe en U possèdent une légère élasticité. Les épaisseurs des butées sont telles que la lame ne dispose de pratiquement aucun jeu perpendiculairement aux branches de l'organe en U. Sous l'action de forces de pression appliquées au support mobile 11 et sensiblement perpendiculairement au plan de la lame, la seconde extrémité se déplace en bloc avec l'organe en U 13 et le support mobile 11. Dans une direction sensiblement parallèle à la lame celle-ci peut glisser à frottement doux en appui sur les butées. En cours d'utilisation ceci permet au point d'application des forces de s'adapter très finement aux déplacements des organes les uns par rapport aux autres. On évite ainsi les microcontraintes parasites qui pourraient nuire d la précision de la mesure. La figure 1A représente le cas où les butées 14, 15 sont solidaires de la lame 12. La figure 1B représente le cas où les butées 14, 15 sont solidaires de l'organe en U 13. Dans ce dernier cas les butées peuvent être formées au cours d'une opération de moulage de l'organe en U 13. Ceci présente l'avantage de pouvoir placer correctement les butées sur un axe commun ce qui évite les réglages qui sont à opérer lorsque les deux butées viennent en contact avec la lame en des points qui ne sont pas parfaitement opposés sur chaque face de la lame.

Au lieu d'être monté sur le support mobile, l'organe en U peut être monté sur le support fixe. Il est possible que les deux supports possèdent tous les deux un organe en U. Dans ce cas le glissement de la lame entre les butées est limité par le fond de la cavité du U afin que la lame ne s'échappe pas des butées.

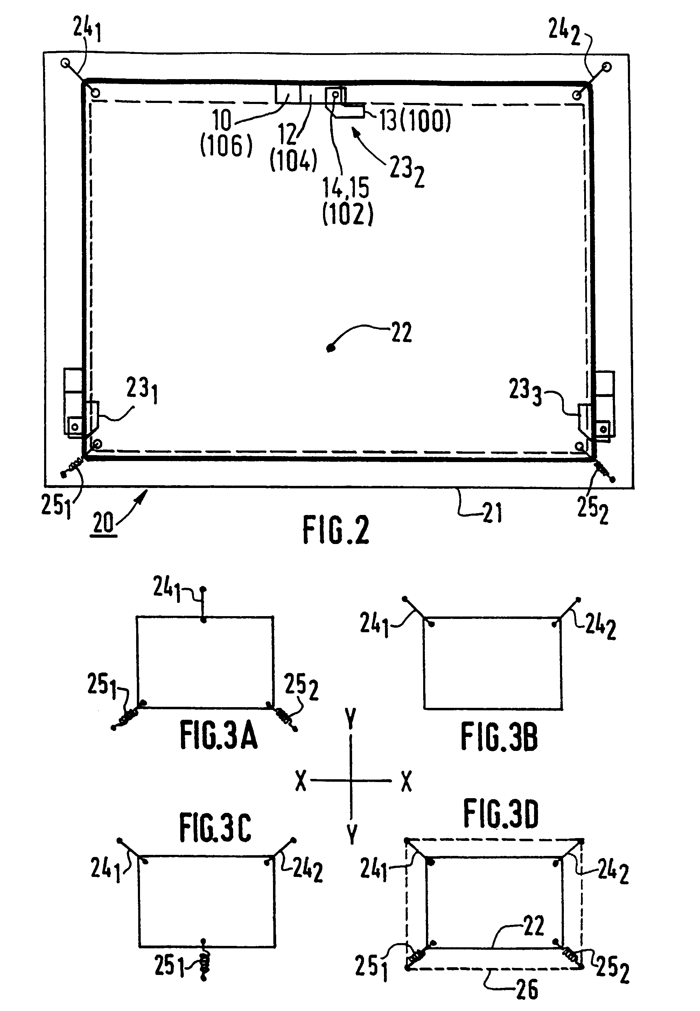

La figure 2 représente un écran tactile 20 comprenant un support fixe formé d'un cadre fixe 21, un support mobile formé d'une plaque mobile 22 et trois détecteurs de force d'appui selon l'invention 23₁, 23₂, 23₃ qui sont agencés d'une part au cadre fixe 21 et d'autre part à la plaque mobile 22. Le cadre est fixé devant un écran de visualisation de type classique (non représenté). L'ensemble comprenant l'écran de visualisation, le cadre fixe et la plaque mobile sur laquelle on appuie est appelé écran tactile. Les trois supports fixes des trois détecteurs sont solidarisés au cadre fixe. Le cadre fixe peut lui-même constituer les supports fixes. Les trois supports mobiles sont constitués par la plaque mobile. Bien que les modules de fixation ne soient pas représentés avec autant de détails que sur les figures 1A-1C, les points suivants sont à noter : le cadre 21 est représenté en traits fins (continu et interrompu) et la plaque mobile 22 est représentée en trait épais. La plaque mobile 22 est suspendue au cadre 21 au moyen de deux éléments de suspension 24₁ et 24₂ qui sont fixés par leurs extrémités à des points d'ancrage représentés par des petits cercles. Les éléments de suspension peuvent être réalisés sous forme de fils ou de tiges de nylon, métal, etc.. de résistance suffisante. De plus le détecteur 23₂ a un organe en U représenté selon une vue de dessus de la figure 1A. Les branches du U sont dirigées parallèlement au côté supérieur.

Les butées 14, 15 sont représentées par un petit cercle. La partie de l'organe en U qui est fixée à la plaque mobile s'étend vers la droite. La lame 12 est représentée par un rectangle. Enfin la partie du support fixe 10 dans lequel la lame est fixée est représentée par un rectangle. Les autres détecteurs de forces 23₁, 23₃, sont représentés d'une manière analogue.

Pour éviter qu'en position verticale ou inclinée le poids de la plaque mobile 22 n'intervienne sur les mesures opérées à l'aide des jauges de contrainte des détecteurs 23₁, 23₂ et 23₃, on suspend la plaque mobile 22 au cadre fixe 21 par des suspensions 24₁, 24₂. Ceci permet également d'éliminer les effets de dilatation ou de gauchissement de la plaque ou du cadre qui peuvent apparaître lors de l'utilisation ou du montage. Les suspensions 24₁, 24₂ situées en haut sont par exemple des tiges souples ou des cables. Des attaches élastiques 25₁, 25₂ peuvent être placées en bas, par exemple des ressorts à boudin, pour relier la plaque mobile 22 au cadre fixe 21 en s'opposant à l'action des suspensions 24₁, 24₂. L'écran tactile peut ainsi opérer pour des inclinaisons maximales de 30° environ par rapport à la verticale.

Il est possible d'utiliser quatre détecteurs placés au voisinage des coins de la plaque. Il peut alors apparaître des difficultés de montage dues à la plus ou moins bonne planéité de la plaque mobile 22 et du cadre fixe 21. Un moyen de réglage peut alors être obtenu en faisant qu'un des quatre détecteurs selon l'invention soit fixé selon le schéma de la figure 1C. Il comprend les mêmes éléments que ceux des figures 1A, 1B mais avec en plus une vis de réglage 30 qui est montée pour agir en opposition avec un ressort 31. Cette vis de réglage 30 sert à régler la distance séparant l'organe en U 13 et la plaque mobile 11. Un ergot de centrage 32 permet d'indexer correctement l'organe en U à la plaque mobile.

Les figures 3A, 3B, 3C, 3D représentent différents modes de montage des suspensions et des attaches élastiques. La figure 3A représente le cas d'une suspension centrale 24₁ située dans la partie haute et de deux attaches élastiques 25₁, 25₂ situées dans la partie basse. Ces dernières sont fixées légèrement en diagonale pour retenir la plaque dans les deux directions de l'axe XX.

La figure 3B représente le cas de deux suspensions 24₁, 24₂ situées dans la partie haute montées pour tirer légèrement en diagonale comme auparavant. La partie basse de la plaque est dans ce cas maintenue en position par les détecteurs de forces eux-mêmes.

La figure 3C représente le cas de la figure 3B auquel a été ajoutée une attache élastique centrale 25₁. Le positionnement de la plaque dans sa partie basse est amélioré.

La figure 3D représente le cas de la figure 2, avec deux suspensions 24₁, 24₂ situées dans la partie haute et deux attaches élastiques 25₁, 25₂ situées dans la partie basse. Il constitue l'exemple préférentiel de réalisation. Les quatre points d'ancrage sur le cadre fixe déterminent un quadrilatère 26 qui entoure la plaque 22. Avec les suspensions et les attaches élastiques agissant en diagonale, la plaque est ainsi maintenue correctement selon les axes XX et YY. Le quadrilatère peut être une autre figure géométrique lorsqu'il y a un nombre différent de points d'ancrage.

Il est possible de réduire la plaque à une barrette longiligne munie de deux détecteurs de forces placées à ses extrémités. L'ensemble opère alors sous forme de curseur.

## Revendications

1. Dispositif à écran tactile (20) muni d'une plaque mobile (22), ayant un poids P, et un cadre fixe (21) qui coopèrent entre eux par au moins deux détecteurs (23₁, 23₂, 23₃) à lame à jauges de contrainte (12) pour détecter des coordonnées de points d'application de forces d'appui exercées sur la plaque mobile (22), caractérisé en ce que la plaque mobile (22) est suspendue au cadre fixe (21) par des moyens de suspension (24₁, 24₂) qui équilibrent totalement ou partiellement le poids P de ladite plaque lorsque ledit cadre et ladite plaque sont placés en position respectivement verticale ou inclinée, les détecteurs étant munis de moyens de montage (10, 11, 13, 14, 15) tels qu'ils permettent au poids de la plaque mobile (22) d'être essentiellement supporté par les moyens de suspension, il y a ainsi un découplage entre les forces de pesanteur et les forces d'appui.

2. Dispositif selon la revendication 1, la plaque mobile et le cadre fixe ayant l'un et l'autre une partie haute et une partie basse, caractérisé en ce que les moyens de suspension (24₁, 24₂) sont fixés aux parties hautes respectives de ladite plaque et dudit cadre.

3. Dispositif selon une des revendications 1 ou 2, caractérisé en ce que les moyens de suspension (24₁, 24₂) sont formés par au moins une tige ou au moins un câble.

4. Dispositif selon une des revendications 2 ou 3, caractérisé en ce que les parties basses de ladite plaque et dudit cadre sont attachées par au moins une attache élastique (25₁, 25₂) qui s'oppose à l'action des moyens de suspension (24₁, 24₂).

5. Dispositif selon la revendication 4, caractérisé en ce qu'il comprend deux moyens de suspension (24₁, 24₂) reliant des points d'ancrage fixés sur lesdites parties hautes et deux attaches élastiques (25₁, 25₂) reliant des points d'ancrage fixés sur lesdites parties basses, les points d'ancrage fixés sur le cadre fixe (21) déterminant une figure géométrique (26) entourant la plaque mobile (22).

6. Dispositif selon une des revendications 1 à 5, caractérisé en ce qu'au moins un détecteur est muni d'une lame à jauge de contrainte (12) ayant une première et/ou une seconde extrémité agencées respectivement au cadre fixe (21) et/ou à la plaque mobile (22) à l'aide d'au moins un organe en U (13), l'(les) extrémité(s) ainsi agencée(s) étant en appui légèrement élastique sur des butées (14, 15) disposées entre les branches de l'organe en U, ladite lame étant pratiquement sans jeu dans une direction perpendiculaire auxdites branches et apte à un déplacement à frottement doux dans une direction quelconque parallèle au plan de la lame.

7. Dispositif selon la revendication 6, caractérisé en ce que les butées (14, 15) ont une faible surface d'appui.

8. Dispositif selon les revendications 6 ou 7, caractérisé en ce que les butées (14, 15) sont fixées par paires soit à la lame (12) soit à l'organe en U (13).

9. Dispositif selon une des revendications 6 à 8, caractérisé en ce que l'élasticité de l'appui est assurée soit par l'organe en U (13) soit par les butées (14, 15).

10. Dispositif selon une des revendications 6 à 8, caractérisé en ce que l'élasticité de l'appui est répartie entre l'organe en U (13) et les butées (14, 15).

11. Dispositif selon une des revendications 6 à 10, caractérisé en ce que les butées (14, 15) sont obtenues par moulage de l'organe en U (13).

12. Dispositif selon une des revendications 6 à 11, caractérisé en ce qu'au moins une butée (14, 15) a une forme arrondie.

13. Dispositif selon une des revendications 6 à 11, caractérisé en ce qu'au moins une butée (14, 15) et/ou l'organe en U (13) est réalisé dans un matériau choisi parmi les matériaux suivants : caoutchouc, matières plastiques, matériaux composites.

## Patentansprüche

1. Tastbildschirm-Anordnung (20), die mit einer beweglichen Schicht (22) mit einem Gewicht P und einem festen Rahmen (21) versehen ist, die beide mittels wenigstens zweier Detektoren (23₁, 23₂, 23₃) mit Dehnungsmeßstreifen miteinander zusammenwirken, um Koordinaten von Punkten einer auf die bewegliche Schicht (22) ausgeübten Druckkraftausübung zu detektieren, dadurch gekennzeichnet, daß die bewegliche Platte (22) am festen Rahmen (21) mit Aufhängemitteln (24₁, 24₂) aufgehängt ist, die ganz oder teilweise das Gewicht P der genannten Platte ausgleichen, wenn der genannte Rahmen und die genannte Platte in eine vertikale bzw. geneigte Position gebracht werden, wobei die Detektoren so mit Montagemitteln (10, 11, 13, 14, 15) versehen sind, daß sie es dem Gewicht der beweglichen Platte (22) ermöglichen, im wesentlichen von den Aufhängemitteln getragen zu werden, und eine Entkopplung zwischen den Gewichtskräften und den Druckkräften gegeben ist.

2. Anordnung nach Anspruch 1, wobei die bewegliche Platte und der feste Rahmen beide einen oberen und einen unteren Teil haben, dadurch gekennzeichnet, daß die Aufhängemittel (24₁, 24₂) mit den jeweiligen oberen und unteren Teilen der genannten Platte und des genannten Rahmens befestigt sind.

3. Anordnung nach Anspruch 1 oder 2, dadurch gekennzeichnet, daß die Aufhängemittel (24₁, 24₂) aus wenigstens einem Band oder wenigstens einem Draht gebildet werden.

4. Anordnung nach einem der Ansprüche 2 oder 3, dadurch gekennzeichnet, daß die unteren Teile der genannten Platte und des genannten Rahmens mit wenigstens einer elastischen Befestigung (25₁, 25₂) angebracht sind, die der Aktion der Aufhängemittel (241, 24₂) entgegenwirkt.

5. Anordnung nach Anspruch 4, dadurch gekennzeichnet, daß sie zwei Aufhängemittel (24₁, 24₂) umfaßt, die die auf den genannten oberen Teilen befestigten Verankerungspunkte verbinden, und zwei elastische Befestigungen (25₁, 25₂), die die auf den genannten unteren Teilen befestigten Verankerungspunkte verbinden, wobei die auf den festen Rahmen (21) befestigten Verankerungspunkte eine geometrische Figur (26) definieren, die die bewegliche Platte (22) umgibt.

6. Anordnung nach einem der Ansprüche 1 bis 5, dadurch gekennzeichnet, daß wenigstens ein Detektor mit einem Blatt mit Dehnungsmeßstreifen (12) versehen, das ein erstes und/oder zweites Ende hat, die jeweils auf dem festen Rahmen (21) und/oder der beweglichen Schicht (22) mit Hilfe eines u-förmigen Organs (13) angebracht sind, wobei das (die) so angebrachte(n) Ende(n) leicht elastisch unter Druck auf die zwischen den Fingern des u-förmigen Organs angeordneten Anschläge (14, 15) steht (stehen), wobei das genannte Blatt praktisch kein Spiel in einer Richtung vertikal zu den genannten Fingern aufweist und zu einer Verschiebung mit leichter Reibung in eine beliebige Richtung parallel zur Ebene des Blattes fähig ist.

7. Anordnung nach Anspruch 6, dadurch gekennzeichnet, daß die Anschläge (14, 15) eine geringe Druckoberfläche haben.

8. Anordnung nach Anspruch 6 oder 7, dadurch gekennzeichnet, daß die Anschläge (14, 15) in Paaren entweder an dem Blatt (12) oder dem u-förmigen Organ (13) befestigt sind.

9. Anordnung nach einem der Ansprüche 6 bis 8, dadurch gekennzeichnet, daß für die Elastizität des Drucks entweder das u-förmige Organ (13) oder die Anschläge (14, 15) sorgen.

10. Anordnung nach einem der Ansprüche 6 bis 8, dadurch gekennzeichnet, daß die Elastizität sich auf das u-förmige Organ (13) und die Anschläge (14, 15) verteilt.

11. Anordnung nach einem der Ansprüche 6 bis 10, dadurch gekennzeichnet, daß die Anschläge (14, 15) durch Formung des u-förmigen Organs (13) ergeben.

12. Anordnung nach einem der Ansprüche 6 bis 11, dadurch gekennzeichnet, daß wenigstens ein Anschlag (14, 15) eine abgerundete Form hat.

13. Anordnung nach einem der Ansprüche 6 bis 11, dadurch gekennzeichnet, daß wenigstens ein Anschlag (14, 15) und/oder u-förmiges Organ (13) aus einem Material hergestellt wird, das aus den folgenden Materialien ausgewählt wird: Gummi, Kunststoffe, Verbundwerkstoffe.

## Claims

1. A tactile screen device (20) which is provided with a mobile plate (22), having a weight P, and a fixed frame (21) which cooperate by way of at least two blade-type detectors (23₁, 23₂, 23₃) with strain gauges (12) for the detection of coordinates of points of application of pressing forces applied to the mobile plate (22), characterized in that the mobile plate (22) is suspended from the fixed frame (21) by suspension means (24₁, 24₂) which completely or partly balance the weight P of said plate when said frame and said plate are placed in the vertical or inclined position, respectively, the detectors being provided with means for mounting (10, 11, 13, 14, 15) enabling the weight of the mobile plate (22) to be carried essentially by the suspension means, decoupling thus also being provided between the forces of gravity and the pressing forces.

2. A device as claimed in Claim 1 in which the mobile plate and the fixed frame both have a top part and a bottom part, characterized in that the suspension means (24₁, 24₂) are fixed to the respective top parts of said plate and said frame.

3. A device as claimed in one of the Claims 1 or 2, characterized in that the suspension means (24₁, 24₂) are formed by at least one tag or at least one cable.

4. A device as claimed in one of the Claims 2 or 3, characterized in that the bottom parts of said plate and said frame are attached by means of at least one elastic fastener (25₁, 25₂) which opposes the effect of the suspension means (24₁, 24₂).

5. A device as claimed in Claim 4, characterized in that it comprises two suspension means (24₁, 24₂) which interconnect fixed anchoring points on said top parts and two elastic fasteners (25₁, 25₂) which interconnect fixed anchoring points on said bottom parts, the fixed anchoring points on the fixed frame (21) defining a geometrical figure (26) which surrounds the mobile plate (22).

6. A device as claimed in one of the Claims 1 to 5, characterized in that at least one detector is provided with a strain-gauge blade (12) which has a first and/or a second end connected to the fixed frame (21) and/or to the mobile plate (22) by means of at least one U-shaped member (13), the end (ends) thus connected bearing slightly elastically on studs (14, 15) provided between the branches of the U-shaped member, said blade having practically no play in a direction perpendicular to said branches and being suitable for low-friction displacement in any direction parallel to the plane of the blade.

7. A device as claimed in Claim 6, characterized in that the studs (14, 15) have a small bearing surface area.

8. A device as claimed in the Claims 6 or 7, characterized in that the studs (14, 15) are connected in pairs either to the blade (12) or to the U-shaped member (13).

9. A device as claimed in one of the Claims 6 to 8, characterized in that the contact elasticity is provided either by the U-shaped member (13) or by the studs (14, 15).

10. A device as claimed in one of the Claims 6 to 8, characterized in that the contact elasticity is distributed between the U-shaped member (13) and the studs (14, 15).

11. A device as claimed in one of the Claims 6 to 10, characterized in that the studs (14, 15) are obtained by moulding of the U-shaped member (13).

12. A device as claimed in one of the Claims 6 to 11, characterized in that at least one stud (14, 15) has a rounded shape.

13. A device as claimed in one of the Claims 6 to 11, characterized in that at least one stud (14, 15) and/or the U-shaped member (13) is made of a material chosen from among the following materials: rubber, plastics, composite materials.
